# EUROPÄISCHE PATENTSCHRIFT

(11) **EP 1 849 531 B1**
(45) Veröffentlichungstag und Bekanntmachung des Hinweises auf die Patenterteilung: **03.06.2009**
(21) Anmeldenummer: 07001233.1
(22) Anmeldetag: 20.01.2007
(51) Int. Cl.: B06B 1/02, B23K 20/10, B24B 1/04

(54) **Vorrichtung zum Bearbeiten von Werkstücken**
Device for machining workpieces
Dispositif d'usinage de pièces

(30) Priorität: 26.04.2006 DE 102006020417
(43) Veröffentlichungstag der Anmeldung: 31.10.2007
(73) Patentinhaber: Herrmann Ultraschalltechnik GmbH & Co. KG, 76307 Karlsbad-Ittersbach (DE)
(72) Erfinder: Schneider, Arnold, 76275 Ettlingen-Schluttenbach (DE); Gnad, Gerhard, 75210 Keltern-Weiler (DE)
(74) Vertreter: Steimle, Josef

(56) Entgegenhaltungen:
- EP-A- 0 540 189
- EP-A- 0 941 774
- WO-A-99/19107
- DE-A1- 4 206 584

## Beschreibung

Die Erfindung betrifft eine Vorrichtung zum Bearbeiten von Werkstücken mittels Ultraschall, mit einem einen Ultraschallgenerator, eine Ultraschallsonotrode und einen Amboss aufweisenden Schwingsystem, wobei ein Werkstück zwischen dem Amboss und der Ultraschallsonotrode bearbeitet wird, und wobei eine Regeleinrichtung für den Ultraschallgenerator vorgesehen ist und die Regeleinrichtung ein dem Ultraschallgenerator vorgeschaltetes Regelglied aufweist, dem aus dem Schwingsystem eine Rückführgröße zugeführt wird und das eine Stellgröße erzeugt und dem Ultraschallgenerator zuführt.

Die Erfindung betrifft also eine Regelvorrichtung für einen Ultraschallgenerator, mit welchem Werkstücke bearbeitet, insbesondere miteinander verschweißt oder geschnitten werden. In einem Schwingsystem erzeugt ein Ultraschallgenerator mittels eines elektroakustischen Wandlers Schwingungen in dessen Resonanzfrequenz, die üblicherweise zwischen 18 und 60 kHz liegen. Mit diesen Schwingungen wird eine Ultraschallsonotrode direkt oder über einen Booster bzw. Konverter betrieben. Die Ultraschallsonotrode stellt zusammen mit dem Amboss das Werkzeug dar, mit dem das Werkstück bearbeitet wird.

Herkömmliche Regelungen (z.B. WO-A-99/19107) für einen Ultraschallgenerator messen bestimmte Systemparameter und Systemsignale, die sie als Informationen aus dem elektrischen und mechanischem Schwingsystem erhalten. Aufgrund dieser Signale und Parameter wird der Ultraschallgenerator geregelt. Dabei werden Veränderungen innerhalb des Schwingsystems erkannt und durch geeignete Algorithmen wird das Schwingsystem wieder auf den ursprünglichen Wert zurückgeführt. Interne Systemparameter und -signale sind z.B. die Schwingfrequenz, der Strom, der Blindstrom, die Spannung, die Phasenlage usw.

Das vorderste Ziel aller Schwingsysteme ist, die Schwingungsamplitude bei möglichst hohem Wirkungsgrad konstant zu halten. Da sich die Resonanzfrequenz des gesamten Schwingsystems, das aus einem mechanischem und einem elektrischen Schwingkreis besteht, während des Betriebs ständig ändert, muss der Regelvorgang ständig wiederholt und möglichst schnell werden. Die Änderungen oder Störungen im Schwingsystem sind bedingt durch Lastwechsel (z.B. Kraftschwankungen), durch Änderungen in der Geometrie aufgrund der Erwärmung, Schwankungen in der Energieversorgung usw.. Dabei gilt, dass je schneller der Regelungsvorgang wiederholt wird und je besser der Regelalgorithmus abgestimmt ist, die Genauigkeit der Regelung verbessert wird. Ein Aufschwingen des Regelkreises muss auf jeden Fall vermieden werden. Dies bedeutet aber, dass die Regelparameter nicht beliebig groß gesetzt werden können.

Aus dem Stand der Technik (DE-A-40 25 637, DE-A-44 00 210, DE-A-42 30 491, DE-A-42 08 669, EP-A-0 173 761 und US-A-4,808,948) sind analoge und digitale Systeme bekannt. Unabhängig hiervon sind aber die im Schwingsystem vorhandenen Parameter die Grundlage für die Regelung der Ultraschallgeneratoren. Diese bekannten Schwingsysteme besitzen den Nachteil, dass bei sehr schnellen Lastwechseln es häufig zu erheblichen Amplitudenschwankungen kommt. Diese Schwankungen können dazu führen, dass bei Überhöhungen die Grenzwerte der mechanischen Komponenten Überschritten werden und diese eventuell sogar zerstört werden. Im anderen Fall kann es aber auch zu einer nicht ausreichenden Verschweißung führen.

Es hat sich gezeigt, dass die Regelung nicht ausreichend schnell reagiert. Ein Hauptgrund hierfür sind die systembedingten Parameter und Signale. Diese ändern sich zwar infolge eines Lastwechsels, aber sie kommen mit einer gewissen Verzögerung beim Regelglied des Ultraschallgenerators an. Diese Verzögerung wird hauptsächlich durch die Schallgeschwindigkeit und die Anzahl der mechanischen Schwingungskomponenten vorgegeben.

Dies bedeutet aber, dass das Regelglied auf ein Ereignis unter extremen Bedingungen erst dann reagiert, wenn dieses Ereignis schon vorüber ist. Auf der Basis der Systemparameter und -signale ist eine Konstanthaltung der Schwingungsamplitude nur schwer möglich. Schnelle Lastwechsel von kleiner als 5 ms führen daher zu erheblichen Schwankungen der Schwingungsamplitude.

Der Erfindung liegt daher die Aufgabe zugrunde, eine Vorrichtung der eingangs genannten Art so weiterzubilden, dass mit dieser bei schnellen Lastwechseln geringere Amplitudenschwankungen vorherrschen.

Diese Aufgabe wird mit einer Vorrichtung der eingangs genannten Art erfindungsgemäß dadurch gelöst, dass zwischen dem Regelglied und dem Ultraschallgenerator eine Verknüpfungsstelle vorgesehen ist, in welcher die Stellgröße des Regelglieds mit einer Prozessgröße aus dem Bearbeitungsprozess miteinander verknüpft werden.

Bei der erfindungsgemäßen Vorrichtung, insbesondere bei der erfindungsgemäßen Regelvorrichtung, werden nicht nur die Parameter und Signale aus dem Schwingsystem für die Regelung herangezogen, sondern es wird mindestens ein zusätzliches externes Signal für die Regelung verwendet. Dieses zusätzliche externe Signal ist zwar mit dem Bearbeitungsprozess verknüpft, aber es wird außerhalb der elektrischen und mechanischen Schwingkreise erzeugt. Es liegt also außerhalb des Schwingsystems, besitzt aber einen zeitlichen Verlauf, der das Bearbeitungsergebnis wiederspiegelt. Dieses zusätzliche externe Signal, nämlich die Prozessgröße, wird nicht vor dem Regelglied, sondern nach diesem in das Regelsystem eingespeist und durchläuft somit nicht die Regelung. Es wird also die Stellgröße des Regelglieds beeinflusst.

Es hat sich gezeigt, dass sehr gute Ergebnisse erzielt werden, wenn die Bearbeitungskraft der Ultraschallsonotrode als Prozessgröße verwendet wird. Diese Bearbeitungskraft hängt vom Bearbeitungsverlauf ab, wird jedoch außerhalb des elektrischen und mechanischen Schwingkreises generiert.

Es besteht auch die Möglichkeit, die Bearbeitungstemperatur als Prozessgröße heranzuziehen, wobei die Temperatur der Spitze der Ultraschallsonotrode verwendet wird. Ebenso denkbar ist ein Wegsignal, das die Verformung des Schwingsystems bedingt durch den Prozess wiederspiegelt.

Mit Vorzug ist die die Stellgröße erzeugende Regeleinrichtung ein PID-Regler. Derartige Regeleinrichtungen haben sich in der Vergangenheit bewährt und liefern durch die erfindungsgemäße Weiterbildung ein hervorragendes Regelergebnis, bei welchem Überschwinger gedämpft werden, so dass Störgrößen nach kürzester Zeit ausgeglichen sind.

Bei einer Weiterbildung ist vorgesehen, dass vor der Verknüpfungsstelle, in welcher die Stellgröße und die Prozessgröße verknüpft werden ein Skalierelement, insbesondere ein Proportionalgeber für die Prozessgröße vorgesehen ist. Mit diesem Skalierelement wird die Prozessgröße so eingestellt, dass die Stellgröße optimal beeinflusst wird. Dabei wird z.B. der von einem Kraftsensor ermittelte Wert mit einem Faktor multipliziert. Dabei wird die Prozessgröße der Stellgröße hinzugerechnet, oder von dieser abgezogen. Dies erfolgt insbesondere über das Skalierelement, insbesondere den Proportionalregler.

Es ist aber auch denkbar, ein künstlich erzeugtes Signal der Stellgröße aufzugeben, welches manuell eingegeben wird. Dieses Signal kann z.B. einen Kraftverlauf simulieren oder das Signal kann mittels eines Inkrementalgebers zeitlich abgestimmt der Regeleinrichtung zugeführt werden. Auch dieses Signal ist nicht oder nur geringfügig von der Ultraschallschwingung beeinflusst.

Bei einer Weiterbildung ist vorgesehen, dass das Skalierelement als lernfähiges System ausgebildet ist. Dabei kann das System so ausgeführt sein, dass es zeitlich wiederkehrende Änderungen erkennt und diesen schon im Vorfeld gegensteuert.

Weitere Vorteile, Merkmale und Einzelheiten der Erfindung ergeben sich aus den Unteransprüchen, sowie der nachfolgenden Beschreibung, in der unter Bezugnahme auf die Zeichnung ein besonders bevorzugtes Ausführungsbeispiel im einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: ein Schaubild zum Regelungsprozess; und
- Figur 2: einen Schwingungsverlauf der Amplitude bei einer Störung.

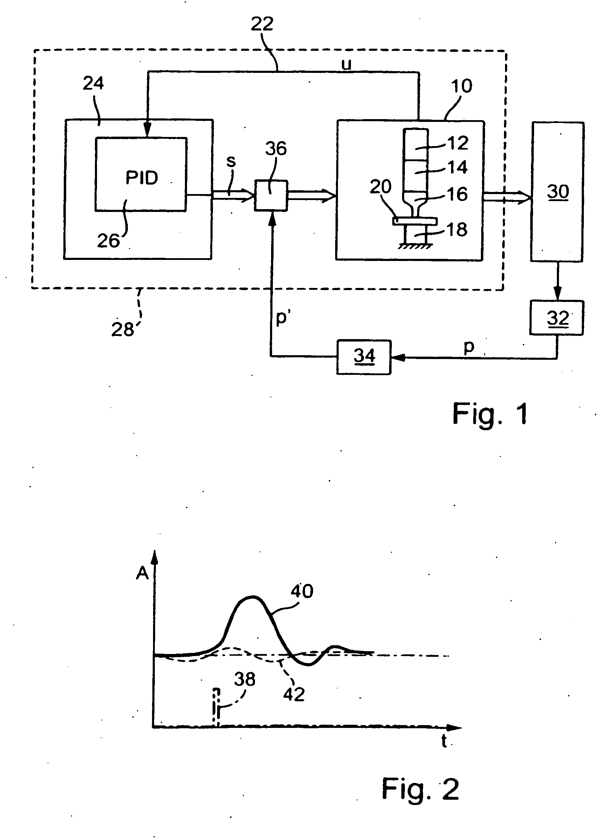

Die Figur 1 zeigt ein Schaubild einer Regelvorrichtung, in welchem mit dem Bezugszeichen 10 ein Schwingsystem bezeichnet ist, welches einen Ultraschallgenerator 12, einen Booster 14, eine Ultraschallsonotrode 16 und einen Amboss 18 aufweist, wobei die Ultraschallsonotrode 16 und der Amboss 18 das Werkzeug darstellen, mit welchem ein Werkstück 20 bearbeitet wird.

Diesem Schwingsystem 10 werden Parameter und Signale (u) entnommen, die über eine Rückführstrecke 22 einer Regeleinrichtung 24 zugeführt werden. Diese Regeleinrichtung 24 weist einen PID-Regler 26 auf. Die Regeleinrichtung 24 erzeugt eine Stellgröße (s), welche dem Schwingsystem 10 und insbesondere dem Ultraschallgenerator 12 zugeführt wird. Das Schwingsystem 10 mit der Regeleinrichtung 24 bildet einen geregelten elektrischen und mechanischen Schwingkreis 28, wie er aus dem Stand der Technik bekannt ist.

Mit 30 ist ein Bearbeitungsprozess, insbesondere ein Schweißprozess bezeichnet, der außerhalb des Schwingkreises 28 liegt, da er nicht direkt von den elektrischen und mechanischen Größen beeinflusst wird. Dieser Bearbeitungsprozess 30 ist mit einem Kraftsensor 32 verbunden, mit welchem der Verlauf der Schweißkraft ermittelt wird. Der Kraftsensor 32 ermittelt eine Prozessgröße (p), die einer Skaliereinheit 34 zugeführt wird. Diese Skaliereinheit 34 liefert eine skalierte Prozessgröße (p'), die einer Verknüpfungsstelle 36 zugeführt wird. Diese Verknüpfungsstelle 36 befindet sich zwischen der Regeleinrichtung 24 und dem Schwingsystem 10, so dass nicht nur die skalierte Prozessgröße (p') sondern auch die Stellgröße (s) der Verknüpfungsstelle 36 zugeführt wird. Die miteinander verknüpften Größen (p') und (s) werden dem Schwingsystem 10 und insbesondere dem Ultraschallgenerator 12 zugeführt.

Es ist deutlich erkennbar, dass beim erfindungsgemäßen System eine außerhalb des Schwingkreises 28 erzeugte Größe, nämlich die Prozessgröße (p) dem Schwingsystem 10 zugeführt wird.

In der Figur 2 ist der zeitliche Verlauf der Amplitude (A) dargestellt, wobei mit 38 ein Störsignal angedeutet ist. Bei herkömmlichen Systemen zeigt der Verlauf des Amplitudensignals 40 eine starke Schwankung mit Überschwingern, wobei beim erfindungsgemäßen System das Amplitudensignal 42 wesentlich schneller auf den ursprünglichen Wert eingeregelt wird. Es ist auch erkennbar, dass die Regelfrequenz kürzer ist, als beim herkömmlichen System, insbesondere m die Hälfte.

## Patentansprüche

1. Vorrichtung zum Bearbeiten von Werkstücken (20) mittels Ultraschall, mit einem einen Ultraschallgenerator (12), eine Ultraschallsonotrode (16) und einen Amboss (18) aufweisenden Schwingsystem (10), wobei das Werkstück (20) zwischen dem Amboss (18) und der Ultraschallsonotrode (16) bearbeitet wird, und wobei eine Regeleinrichtung (24) für den Ultraschallgenerator (12) vorgesehen ist und die Regeleinrichtung (24) ein dem Ultraschallgenerator (12) vorgeschaltetes Regelglied (26) aufweist, dem aus dem Schwingsystem (10) eine Rückführgröße (u) zugeführt wird und das eine Stellgröße (s) erzeugt und dem Ultraschallgenerator (12) zuführt, wobei das Schwingsystem (10) und die Regeleinrichtung (24) einen geregelten elektrischen und mechanischen Schwingkreis (28) bilden, **dadurch gekennzeichnet, dass** ein außerhalb des Schwingkreises (28) liegender Bearbeitungsprozess (30) vorgesehen ist, der nicht direkt von den elektrischen und mechanischen Größen des Schwingkreises (28) beeinflusst wird, dass zwischen dem Regelglied (26) und dem Ultraschallgenerator (12) eine Verknüpfungsstelle (36) vorgesehen ist, in welcher die Stellgröße (s) des Regelglieds (26) mit einer Prozessgröße (p) aus dem Bearbeitungsprozess (30) verknüpft wird.

2. Vorrichtung nach Anspruch 1, **dadurch gekennzeichnet, dass** die Prozessgröße (p) die Bearbeitungskraft der Ultraschallsonotrode (16) ist.

3. Vorrichtung nach einem der vorhergehenden Ansprüche, **dadurch gekennzeichnet, dass** die Prozessgröße (p) die Bearbeitungstemperatur der Spitze der Ultraschallsonotrode (16) ist.

4. Vorrichtung nach einem der vorhergehenden Ansprüche, **dadurch gekennzeichnet, dass** die Prozessgröße (p) ein die Verformung des Schwingsystems erfassendes oder wiederspiegelndes Signal ist.

5. Vorrichtung nach einem der vorhergehenden Ansprüche, **dadurch gekennzeichnet, dass** die Prozessgröße (p) ein vorgegebenes, synchron mit dem Prozess mitlaufendes Signal ist.

6. Vorrichtung nach einem der vorhergehenden Ansprüche, **dadurch gekennzeichnet, dass** die die Stellgröße (s) erzeugende Regeleinrichtung (24) einen PID-Regler aufweist.

7. Vorrichtung nach einem der vorhergehenden Ansprüche, **dadurch gekennzeichnet, dass** vor der Verknüpfungsstelle (36) ein Skalierelement (34), insbesondere ein Proportionalregier für die Prozessgröße (p) vorgesehen ist.

8. Vorrichtung nach Anspruch 7, **dadurch gekennzeichnet, dass** das Skalierelement (34) als lernfähiges System ausgebildet ist.

## Claims

1. A device for processing a workpiece (20) using ultrasound, the device comprising an ultrasound generator (12), an ultrasound sonotrode (16), an anvil (18) forming a resonant system (10), wherein the workpiece (20) is processed between said anvil (18) and said ultrasound Sonotrode (16), further comprising control means (24) for the ultrasound generator (12) and a control member (26) connected upstream of said ultrasound generator (12) for receiving a feedback signal (u) from said resonant system (10) and generating a correcting variable (s) for the ultrasonic generator (12), the resonant system (10) and the control means (24) form a controlled electrical and mechanical resonant loop (28), **characterized in that** a work process (30) is present being outside the resonant loop (28) being not influenced directly by the electrical and mechanical values of the resonant loop (28), that a connecting means (36) disposed between said control member (26) and said ultrasound generator (12) to link said correcting variable (s) of the control member (26) to a processing variable (p) of the work process (30).

2. The device of claim 1, **characterized in that** said processing variable (p) is the processing force of said ultrasound sonotrode (16).

3. The device of one of the preceding claims, **characterized in that** said processing variable (p) is the processing temperature of the tip of said ultrasound sonotrode (16).

4. The device of one of the preceding claims, **characterized in that** said processing variable (p) is a signal that measures or reflects deformation of said resonant system.

5. The device of one of the preceding claims, **characterized in that** said processing variable (p) is a predetermined signal that synchronously accompanies the process.

6. The device of one of the preceding claims, **characterized in that** in said control means (24) creating said correcting variable (s) is provided with a PID controller.

7. The device of one of the preceding claims, **characterized in that** a scaling element (34), particularly a proportional controller is provided for the processing variable (p), disposed upstream of said connecting means (36).

8. The device of claim 7, **characterized in that** said scaling element (34) is an adaptive system.

## Revendications

1. Dispositif d'usinage de pièces (20) au moyen d'ultrasons comprenant un système vibrant (10) qui comprend un générateur d'ultrasons (12), une sonotrode (16) et une enclume (18), la pièce (20) étant usinée entre l'enclume (18) et la sonotrode (16), un dispositif de régulation (24) du générateur d'ultrasons (12) étant prévu et le dispositif de régulation (24) présentant un organe de régulation (26) agencé en amont du générateur d'ultrasons (12) et vers lequel est acheminé depuis le système vibrant (10) une variable de réaction (u) et qui produit une grandeur réglante (s) et la transfère au générateur d'ultrasons (12), le système vibrant (10) et le dispositif de régulation (24) formant un circuit électrique et mécanique vibrant régulé (28), **caractérisé en ce qu'**il est prévu un processus d'usinage (30) situé en dehors du circuit vibrant (28) et qui n'est pas directement influencé par les grandeurs électriques et mécaniques du circuit vibrant (28), et **en ce qu'**un point de liaison (36) est prévu entre l'organe de régulation (26) et le générateur d'ultrasons (12), point auquel la grandeur réglante (s) de l'organe de régulation (26) est reliée à une variable de processus (p) issue du processus d'usinage (30).

2. Dispositif selon la revendication 1, **caractérisé en ce que** la variable de processus (p) est la force d'usinage de la sonotrode (16).

3. Dispositif selon l'une quelconque des revendications précédentes, **caractérisé en ce que** la variable de processus (p) est la température d'usinage de la pointe de la sonotrode (16).

4. Dispositif selon l'une quelconque des revendications précédentes, **caractérisé en ce que** la variable de processus (p) est un signal détectant ou reflétant la déformation du système vibrant.

5. Dispositif selon l'une quelconque des revendications précédentes, **caractérisé en ce que** la variable de processus (p) est un signal prédéfini synchrone avec le processus.

6. Dispositif selon l'une quelconque des revendications précédentes, **caractérisé en ce que** le dispositif de régulation (24) produisant la grandeur réglante (s) comprend un régulateur PID.

7. Dispositif selon l'une quelconque des revendications précédentes, **caractérisé en ce qu'**un élément de mise à l'échelle (34) de la variable de processus (p), notamment un régulateur proportionnel, est prévu en amont du point de liaison (36).

8. Dispositif selon la revendication 7, **caractérisé en ce que** l'élément de mise à l'échelle (34) est conçu sous la forme d'un système autoadaptatif.
